# FASCICULE DE BREVET EUROPEEN

(11) **EP 3 074 257 B1**
(45) Date de publication et mention de la délivrance du brevet: **08.07.2020**
(21) Numéro de dépôt: 14803151.1
(22) Date de dépôt: 28.11.2014
(51) Int. Cl.: B60W 20/40, B60K 6/52, B60W 10/02, B60W 10/06, B60W 10/08, B60W 30/18, B60K 6/48

(54) **PROCEDE ET SYSTEME DE DEMARRAGE D'UN MOTEUR THERMIQUE**
VERFAHREN UND SYSTEM ZUM STARTEN EINES VERBRENNUNGSMOTORS
METHOD AND SYSTEM FOR STARTING A COMBUSTION ENGINE

(30) Priorité: 28.11.2013 FR 1361778
(43) Date de publication de la demande: 05.10.2016
(73) Titulaire: Renault S.A.S., 92100 Boulogne-Billancourt (FR)
(72) Inventeur: DEBERT, Maxime, F-78000 Versailles (FR); LAUNAY, Grégory, F-75015 Paris (FR); MALOUM, Abdelmalek, F-94550 Chevilly-Larue (FR); KETFI-CHERIF, Ahmed, F-78990 Elancourt (FR)
(86) Numéro de dépôt international: PCT/EP2014/075899
(87) Numéro de publication internationale: WO 2015/079006

(56) Documents cités:
- EP-A1- 2 127 984
- EP-A1- 2 292 489
- DE-A1- 10 260 435
- DE-A1- 19 814 402
- DE-A1-102009 027 001

## Description

La présente invention concerne le domaine des moteurs thermiques de véhicules équipés de la fonction d'arrêt et démarrage automatique desdits moteurs.

L'invention concerne plus particulièrement un procédé de démarrage d'un moteur thermique équipant un véhicule automobile de type hybride ou bi-mode et un système pour la mise en œuvre d'un tel procédé.

L'invention concerne également un véhicule automobile de type hybride ou bi-mode comportant un tel système de démarrage d'un moteur thermique.

On connaît du document EP 2 127 984 A1 un procédé de démarrage d'un moteur thermique d'un véhicule hybride entraîné par un moteur additionnel électrique. Le moteur thermique est accouplé à un arbre d'entraînement des roues avant du véhicule à partir d'un embrayage et le moteur électrique est relié directement à un arbre d'entraînement des roues arrière du véhicule. Lors d'une consigne de couple demandée par un conducteur du véhicule, un démarreur est activé pour démarrer le moteur thermique, puis un embrayage est fermé afin d'accoupler le moteur thermique à l'arbre d'entraînement des roues avant.

Dans l'art antérieur, il est connu d'équiper les véhicules de la fonction d'arrêt et de démarrage également nommée «Stop&Start» ou encore «Stop&Go» consistant à couper automatiquement le moteur thermique lorsque le véhicule est immobile, sous respect de certaines conditions (point mort, frein de parking engagé notamment).

Par exemple en ville lors de l'arrêt à un feu rouge, le moteur thermique est automatiquement stoppé, puis, quand le feu devient vert, il est démarré, à la suite d'une action ou d'un enchaînement d'actions du conducteur traduisant sa volonté de redémarrer son véhicule.

Une telle fonction d'arrêt et de démarrage vise à réduire la consommation globale du véhicule et à limiter les émissions en gaz polluant engendrées par ce véhicule ainsi que les nuisances sonores.

Pour ce faire, les véhicules sont rendus aptes à fonctionner selon le mode «Stop&Go» ou «Stop&Start» grâce à l'utilisation d'une machine électrique réversible, comme un alterno-démarreur, qui est couplée au moteur thermique et alimentée par un onduleur en mode démarreur.

Cependant, un des inconvénients majeurs lié à l'utilisation d'un alterno-démarreur réside dans le fait qu'il reste une solution extrêmement coûteuse en termes de fabrication et d'intégration dans un groupe motopropulseur.

La présente invention vise à résoudre ces problèmes résultant des inconvénients de l'état de l'art, dans le cadre d'un véhicule comportant deux motorisations : une motorisation thermique et une motorisation additionnelle de type électrique ou à accumulation d'énergie.

Avantageusement, l'invention est mise en œuvre au sein d'un groupe motopropulseur hybride dépourvu d'un alterno-démarreur et comprenant un moteur thermique et un ou deux moteurs électriques.

L'invention concerne un procédé de démarrage d'un moteur thermique équipant un véhicule automobile hybride ou bi-mode, le procédé prévoyant, lors d'une consigne de couple demandée par un conducteur du véhicule, un démarrage d'un moteur additionnel visant à accélérer le véhicule, le procédé étant caractérisé en ce que le démarrage du moteur additionnel vise à accélérer le véhicule au-delà d'une vitesse seuil (VA) pour laquelle le moteur thermique est entraîné au-delà de son seuil de régime de calage lorsque ledit moteur thermique est accouplé mécaniquement aux roues du véhicule et en ce que, lorsque la vitesse du véhicule est sensiblement supérieure ou égale à la vitesse seuil, un signal visant à démarrer le moteur thermique est émis par une unité de commande.

Dans d'autres modes de réalisation :
- le procédé comprend une étape de traitement dans laquelle la vitesse du véhicule est comparée à la vitesse seuil ;
- le démarrage du moteur thermique est réalisé simultanément à l'arrêt du moteur additionnel lorsque la vitesse du véhicule est sensiblement supérieure ou égale à la vitesse seuil ;
- l'accouplement du moteur thermique aux roues du véhicule est réalisé par la fermeture d'un embrayage du véhicule ;
- le procédé comprend une étape de basculement de couple prévoyant que le démarrage du moteur thermique et l'arrêt du moteur additionnel sont réalisés de sorte que le couple fourni aux roues par le moteur additionnel diminue d'autant que le couple fourni aux roues par le moteur thermique augmente ;
- le procédé comprend une étape de configuration du moteur thermique autorisant son démarrage ;
- l'étape de configuration consiste en l'activation d'un dispositif d'alimentation en carburant du moteur thermique et/ou d'un dispositif d'allumage du véhicule et/ou d'un dispositif de préchauffage d'une chambre de carburation du moteur thermique, et
- le procédé prévoit, lors de l'accouplement, une détermination d'un rapport de vitesse adéquat permettant d'assurer la continuité de la consigne de couple demandée par le conducteur du véhicule.

L'invention concerne également un système de démarrage d'un moteur thermique équipant un véhicule automobile hybride ou bi-mode, comprenant des éléments matériels et logiciels mettant en œuvre un procédé de démarrage d'un moteur thermique selon l'une quelconque des revendications précédentes.

Avantageusement, les éléments matériels comprennent une unité de commande, un capteur de vitesse, un moteur additionnel et un dispositif d'accouplement, le dispositif d'accouplement comprenant notamment une boîte de vitesses robotisée et un embrayage et étant susceptible de relier le moteur thermique à des roues du véhicule par l'intermédiaire d'une chaîne de transmission.

L'invention concerne aussi un véhicule automobile hybride ou bi-mode comprenant un moteur thermique, le véhicule comportant un tel système de démarrage du moteur thermique, notamment le moteur thermique et le moteur additionnel étant reliés à des essieux différents.

D'autres avantages et caractéristiques de l'invention apparaîtront mieux à la lecture de la description d'un mode de réalisation préféré qui va suivre, en référence aux figures ci-dessous, réalisé à titre d'exemple indicatif et non limitatif :

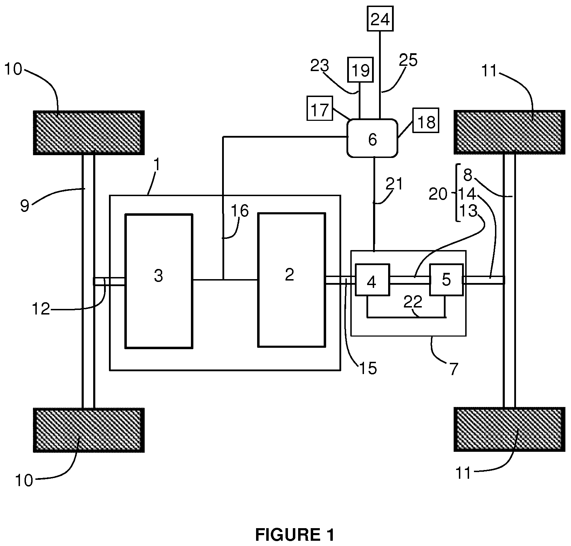

- la figure 1 représente schématiquement un véhicule comprenant un système de commande de démarrage d'un moteur thermique selon ce mode de réalisation de l'invention ;
- la figure 2A montre la vitesse du véhicule par rapport au temps dans le cadre de la mise en œuvre du procédé de démarrage du moteur thermique selon ce mode de réalisation de l'invention ;
- la figure 2B montre le couple fourni par le moteur thermique par rapport au temps dans le cadre de la mise en œuvre du procédé de démarrage du moteur thermique selon ce mode de réalisation de l'invention ;
- la figure 2C montre le couple fourni par un moteur additionnel par rapport au temps dans le cadre de la mise en œuvre du procédé de démarrage du moteur thermique selon ce mode de réalisation de l'invention, et
- la figure 3 illustre un basculement entre les couples fournis par le moteur thermique et le moteur additionnel dans le cadre de la mise en œuvre du procédé de démarrage du moteur thermique selon ce mode de réalisation de l'invention.

De manière non limitative, ce mode réalisation de l'invention est mis en œuvre au sein d'un véhicule comportant un groupe motopropulseur hybride 1 ou bi mode.

Un tel véhicule comporte un châssis, un essieu avant comprenant un arbre 8 reliant les roues avant 11, un essieu arrière comprenant un arbre 9 reliant les roues arrière 10.

Le groupe motopropulseur hybride 1 ou bi-mode comporte deux motorisations différentes dont une motorisation correspondant à un moteur thermique 2, et un moteur électrique qui correspond donc au moteur additionnel 3 défini précédemment.

Le moteur électrique 3 est relié à une batterie haute tension par l'intermédiaire d'un convertisseur et d'une électronique de commande pour l'alimenter.

Selon le mode de réalisation présenté, le moteur thermique 2 entraîne l'arbre avant 8 et donc les roues avant 11, tandis que le moteur électrique 3 entraîne l'arbre arrière 9 et donc les roues arrière 10. Ces deux moteurs sont indépendants mécaniquement l'un de l'autre.

Le moteur électrique 3 est ainsi agencé au niveau de l'essieu arrière du véhicule voire même intégré dans cet essieu.

Selon une variante de réalisation, deux moteurs électriques sont utilisés, chacun étant destiné à entraîner une des roues 10 de l'essieu arrière.

Selon une variante additionnelle de réalisation, le moteur additionnel 3 correspond à un moteur supplémentaire venant équiper le véhicule, en complément du groupe motopropulseur hybride 1 ou bi-mode.

Concernant le moteur thermique 2 celui-ci peut être agencé au niveau de l'essieu avant du véhicule.

Ainsi dans ce mode de réalisation, les quatre roues du véhicule sont motrices, sans la complication de la transmission mécanique entre les trains avant et arrière qui peut être rencontrée sur certains véhicules.

Selon l'exemple de réalisation proposé, le moteur électrique 3 situé au niveau de l'essieu arrière entre les roues 10 du véhicule, est relié mécaniquement à l'arbre d'essieu 9 arrière par un élément de transmission 12. Cet élément de transmission 12 est apte à fournir un couple qui est transmis aux roues 10 par l'intermédiaire de l'arbre d'essieu 9 arrière, afin de faire avancer le véhicule.

Le moteur électrique 3 peut comprendre un embrayage agencé de façon à commander le couple fourni par l'élément de transmission 12. Cet embrayage peut alors assurer également un patinage afin que les deuxièmes roues motrices 10 puissent tourner à différentes vitesses angulaires.

Le moteur thermique 2 est relié mécaniquement à un dispositif d'accouplement 7 par un arbre de transmission 15, ledit dispositif comportant une boîte de vitesses 5 relié à un embrayage 4 par un ou des élément(s) de liaison 22. Un convertisseur de couple peut également être utilisé.

Ce moteur thermique 2 est apte à fournir un couple qui peut être transmis aux roues 11 afin de permettre le déplacement du véhicule, par l'arbre de transmission 15 et une chaîne de transmission 20. Cette chaîne de transmission 20 comporte l'arbre 8 de l'essieu avant auquel sont reliées les roues avant 11, et des arbres de transmission d'entrée 13 et de sortie 14 de la boîte de vitesses 5.

Avantageusement, selon un mode préféré de mise en œuvre de l'invention, la boîte de vitesses 5 est une boîte de vitesses robotisée, apte à modifier le rapport de démultiplication entre les arbres de transmission d'entrée 13 et de sortie 14 par des actionneurs, hydrauliques ou électromécaniques. Une telle boîte de vitesses est plus facile à piloter dans le mode de fonctionnement hybride du véhicule, ainsi qu'au démarrage selon l'invention, qu'une boîte de vitesses manuelle.

Le véhicule comprend également un système de démarrage du moteur thermique 2 comprenant :
- une unité de commande 6 du mode de fonctionnement du véhicule, reliée aux moteurs 2 et 3 par une liaison de commande 16, et reliée au dispositif d'accouplement 7 par l'intermédiaire de la liaison 21. L'unité de commande 6 comprend également des ressources matérielles qui sont aptes à mettre en œuvre un programme informatique,
- au moins un capteur 24 susceptible de délivrer une information de la consigne de couple donnée par le conducteur ou d'une donnée représentative de cette consigne, et envoyée, par une liaison 25, à l'unité de commande 6. Cette information peut notamment comprendre l'activation de la pédale d'accélérateur et/ou de frein du véhicule, ainsi que le niveau d'enfoncement de ces pédales ;
- au moins un capteur 19 de vitesse du véhicule connecté à l'unité de commande 6 par un élément de liaison 23.

L'unité de commande 6 est notamment apte à déterminer dynamiquement les couples à appliquer à chacun des deux arbres d'essieu avant 8 et arrière 9 et à optimiser le fonctionnement du groupe motopropulseur 1, en fonction également de la motricité 17 demandée par le conducteur et les conditions de roulage 18, données qui sont également transmises à l'unité de commande 6.

Ainsi que nous l'avons vu précédemment, le véhicule comprend un groupe motopropulseur 1 comportant deux moteurs différents et pouvant fonctionner selon deux modes : un mode électrique pur où seul le moteur 3 permet le déplacement du véhicule, et un mode hybride où l'unité de commande 6 détermine en fonction des conditions de roulage, de la vitesse et des couples demandés, quelle motorisation est la plus adaptée entre la motorisation thermique et/ou la motorisation électrique.

En fonctionnement hybride, lorsque le véhicule se déplace, l'unité de commande 6 reçoit en permanence des signaux provenant du capteur 19 de vitesse, du capteur 24 permettant de déterminer la consigne de couple donnée par le conducteur, ainsi que des conditions de roulage 18 et la motricité 17 souhaitée par le conducteur. Cette consigne de couple correspond par exemple à des paramètres résultant du comportement du conducteur.

Cette unité de commande 6 est également apte à contrôler le moteur thermique 2 et le moteur additionnel 3 ainsi que le dispositif d'accouplement 7 en recevant/émettant des signaux de/vers chacun d'entre eux.

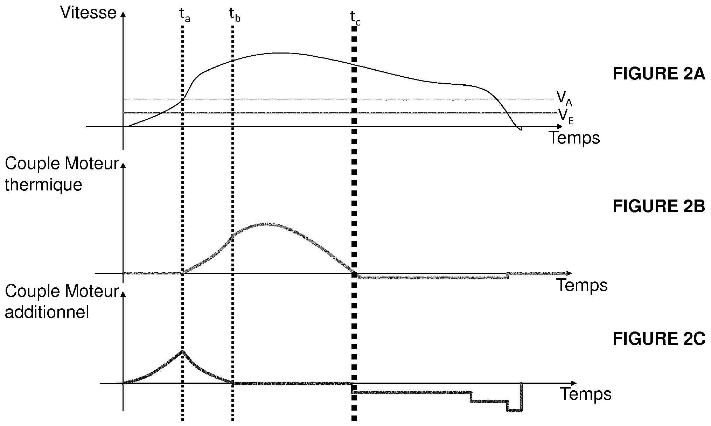

Selon l'invention, en mode hybride, alors que le moteur thermique 2 est arrêté par le dispositif stop&start, lorsque le conducteur désire déplacer à nouveau son véhicule, ce n'est pas le moteur thermique 2 qui est démarré mais le moteur électrique 3, en référence aux figures 2A et 2C. Le véhicule est ainsi dans un mode électrique où le moteur électrique 3 assure, à lui seul, le déplacement du véhicule.

Ce mode perdure tant que la vitesse du véhicule est inférieure ou égale à la vitesse V_{A}. Cette vitesse V_{A} correspond à une vitesse seuil pour laquelle le moteur thermique 2 peut être entraîné au-delà de son seuil de régime de calage, lorsque l'accouplement mécanique est réalisé. La valeur de ce seuil dépend de l'étagement de la boîte de vitesse, et se situe entre 15 km/h et 40 km/h.

L'unité de commande 6 compare ainsi, lors d'une étape de traitement, la vitesse V du véhicule au seuil V_{A} afin de déterminer si le moteur thermique 2 peut être démarré.

Lorsque la vitesse V du véhicule est sensiblement supérieure ou égale à la vitesse V_{A}, à l'instant tₐ, alors l'unité de commande 6 émet un signal visant simultanément à démarrer le moteur thermique 2 et à déclencher l'arrêt du moteur électrique 3, en référence aux figures 2A, 2B et 2C.

L'unité de commande 6 émet également un signal vers le dispositif d'accouplement 7 de sorte à ce que le moteur thermique 2 soit accouplé aux roues 11 de l'essieu avant du véhicule, par fermeture de l'embrayage, lors d'une étape d'accouplement.

Plus précisément, l'élément 15 de transmission est accouplé mécaniquement à la chaîne 20 de transmission qui relie cet élément 15 de transmission aux roues 11. Durant cette étape d'accouplement, le couple fourni par le moteur thermique 2 est piloté pour être nul afin que le conducteur ne ressente aucun à-coup.

L'unité de commande 6 réalise également une configuration du moteur thermique 2 afin que ce dernier soit mis en condition pour démarrer. Pour ce faire, l'unité de commande 6 active un dispositif d'alimentation en carburant du moteur thermique 2 et éventuellement un dispositif d'allumage du véhicule - système à allumage commandé ou électronique - ou un dispositif de préchauffage de la chambre de carburation du moteur thermique 2.

Lors de cette étape d'accouplement, l'unité de commande 6 détermine également le rapport de vitesse adéquat, qui sera appliqué par le dispositif d'accouplement 7 *via* la boîte de vitesses 5, pour assurer la continuité du couple demandé par le conducteur.

De plus, l'unité de commande 6, lors d'une étape de basculement de couple, prévoit que le démarrage du moteur thermique 2, à l'instant tₐ,et l'arrêt de le moteur additionnel 3 sont réalisés de sorte que le couple fourni aux roues 10 par le moteur additionnel 3 diminue, jusqu'à devenir nul, à l'instant t_{b}, d'autant que le couple fourni aux roues 11 par le moteur thermique 2 augmente.

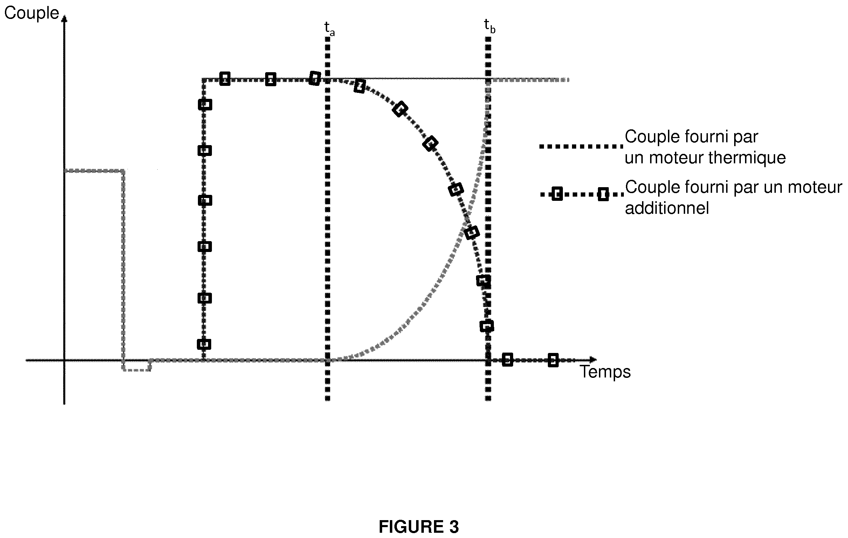

Cette étape de basculement de couple est illustrée à la figure 3 entre les instant tₐ et t_{b} tels que précédemment définis. Cette étape de basculement permet d'assurer une continuité de couple en phase notamment avec la consigne de couple demandée par le conducteur.

Après la réalisation de l'étape de basculement, à partir de l'instant t_{b}, le véhicule circule en mode hybride, avec, selon l'exemple proposé, le seul moteur thermique 2 en action.

Le mode hybride peut également comprendre un fonctionnement simultané du moteur électrique 3 et du moteur thermique 2, lors par exemple d'une très forte accélération.

Selon une mise en œuvre de l'invention, lorsque le conducteur désire ralentir son véhicule, par exemple en lever de pied de l'accélérateur, le véhicule décélère, et le couple du moteur thermique 2 diminue, tel que le montre la figure 2B.

Par la suite, à partir de l'instant t_{c}, où le couple généré par le moteur thermique est nul, le moteur électrique 3 est sollicité, en réalisant un freinage qui peut être récupératif, afin de transformer une partie de l'énergie mécanique issue du freinage en énergie électrique. Le moteur additionnel 3 fonctionne alors en génératrice. Cet effet s'accentue au fur et à mesure que la vitesse diminue.

En référence aux figures 2A et 3, lorsque la vitesse V du véhicule est sensiblement inférieure ou égale à une vitesse seuil V_{E} inférieure à V_{A}, alors l'unité de commande 6 émet un signal visant à arrêter le moteur thermique 2, et, dans le même temps, à augmenter l'action du moteur électrique 3 dans son fonctionnement en génératrice.

La vitesse V_{E} correspond à une vitesse seuil configurable au regard de laquelle la vitesse V du véhicule est comparée lors d'une étape de traitement réalisée par l'unité de commande 6 afin de déterminer si le moteur thermique 2 doit être arrêté. La valeur de cette vitesse seuil V_{E} dépend de l'étagement de la boîte de vitesse et peut être comprise entre environ 6 km/h et 12 km/h.

L'unité de commande 6 émet également un signal vers le dispositif d'accouplement 7 de sorte que l'élément 15 de transmission du moteur thermique 2 soit désaccouplé mécaniquement de la chaîne 20 de transmission qui relie cet élément 15 de transmission aux premières roues 11 de l'essieu avant du véhicule.

Il peut être prévu, dans une variante de réalisation de l'invention, que l'unité de commande 6 tienne compte de la charge de la batterie pour la gestion du mode de démarrage du véhicule tel qu'il est envisagé dans la présente invention. Il peut notamment être envisagé que l'unité de commande 6 inhibe ce mode de fonctionnement lorsque le niveau de charge de la batterie est faible et/ou veille à ce qu'un dispositif permette de recharger la batterie dans les phases de roulage du véhicule, afin que le démarrage du véhicule par le moteur additionnel puisse se réaliser.

Notons que dans une variante, le moteur thermique 2 et le moteur additionnel 3 peuvent être reliés au même essieu.

Ce moteur additionnel 3 peut également concerner tout moteur fonctionnant selon les technologies suivantes :
- pile à combustible ;
- énergie latente de compression-détente de gaz, et/ou
- volant d'inertie.

## Revendications

1. Procédé de démarrage d'un moteur thermique (2) équipant un véhicule automobile hybride ou bi-mode, le procédé prévoyant, lors d'une consigne de couple demandée par un conducteur du véhicule, un démarrage d'un moteur additionnel (3) visant à accélérer le véhicule, le procédé étant **caractérisé en ce que** le démarrage du moteur additionnel (3) vise à accélérer le véhicule au-delà d'une vitesse seuil (V_{A}) pour laquelle le moteur thermique (2) est entrainé au-delà de son seuil de régime de calage lorsque ledit moteur thermique (2) est accouplé mécaniquement aux roues (11) du véhicule et **en ce que**, lorsque la vitesse du véhicule est sensiblement supérieure ou égale à la vitesse seuil (V_{A}), un signal visant à démarrer le moteur thermique (2) est émis par une unité de commande (6).

2. Procédé selon la revendication précédente, **caractérisé en ce qu'**il comprend une étape de traitement dans laquelle la vitesse (V) du véhicule est comparée à la vitesse seuil (V_{A}).

3. Procédé selon l'une quelconque des revendications précédentes, **caractérisé en ce que** le démarrage du moteur thermique (2) est réalisé simultanément à l'arrêt du moteur additionnel (3) lorsque la vitesse (V) du véhicule est sensiblement supérieure ou égale à la vitesse seuil (V_{A}).

4. Procédé selon l'une quelconque des revendications précédentes, **caractérisé en ce que** l'accouplement du moteur thermique (2) aux roues (11) du véhicule est réalisé par la fermeture d'un embrayage (4) du véhicule.

5. Procédé selon l'une quelconque des revendications 3 et 4, **caractérisé en ce qu'**il comprend une étape de basculement de couple prévoyant que le démarrage du moteur thermique (2) et l'arrêt du moteur additionnel (3) sont réalisés de sorte que le couple fourni aux roues (10) par le moteur additionnel (3) diminue d'autant que le couple fourni aux roues (11) par le moteur thermique (2) augmente.

6. Procédé selon l'une quelconque des revendications précédentes, **caractérisé en ce qu'**il comprend une étape de configuration du moteur thermique (2) autorisant son démarrage.

7. Procédé selon la revendication précédente, **caractérisé en ce que** l'étape de configuration consiste en l'activation d'un dispositif d'alimentation en carburant du moteur thermique (2) et/ou d'un dispositif d'allumage du véhicule et/ou d'un dispositif de préchauffage d'une chambre de carburation du moteur thermique (2).

8. Procédé selon l'une quelconque des revendications précédentes, **caractérisé en ce qu'**il prévoit, lors de l'accouplement, une détermination d'un rapport de vitesse adéquat permettant d'assurer la continuité de la consigne de couple demandée par le conducteur du véhicule.

9. Système de démarrage d'un moteur thermique (2) équipant un véhicule automobile hybride ou bi-mode, comprenant des éléments matériels et logiciels mettant en œuvre un procédé de démarrage d'un moteur thermique (2) selon l'une quelconque des revendications précédentes.

10. Système selon la revendication précédente, **caractérisé en ce que** les éléments matériels comprennent une unité de commande (6), un capteur de vitesse (19), un moteur additionnel (3) et un dispositif d'accouplement (7), le dispositif d'accouplement (7) comprenant notamment une boîte de vitesses (5) robotisée et un embrayage (4) et étant susceptible de relier le moteur thermique (2) à des roues (11) du véhicule par l'intermédiaire d'une chaîne de transmission (20).

11. Véhicule automobile hybride ou bi-mode comprenant un moteur thermique (2), caractérisé en qu'il comporte un système de démarrage du moteur thermique (2) selon l'une quelconque des revendications 9 et 10, notamment le moteur thermique (2) et le moteur additionnel (3) étant reliés à des essieux différents.

## Patentansprüche

1. Verfahren zum Starten eines Verbrennungsmotors (2), der in einem Hybrid- oder Doppelmoduskraftfahrzeug angeordnet ist, wobei das Verfahren bei einem von einem Fahrzeugführer geforderten Drehmomentsollwert das Starten eines Zusatzmotors (3) zum Beschleunigen des Fahrzeugs vorsieht, wobei das Verfahren **dadurch gekennzeichnet ist, dass** das Starten des Zusatzmotors (3) das Fahrzeug über eine Schwellengeschwindigkeit (V_{A}) hinaus beschleunigen soll, bei der der Verbrennungsmotor (2) über seine Festbremsdrehzahlschwelle hinaus angetrieben wird, wenn der Verbrennungsmotor (2) mechanisch mit den Rädern (11) des Fahrzeugs gekoppelt wird, und dass ein Signal zum Starten des Verbrennungsmotors (2) durch eine Steuereinheit (6) ausgegeben wird, wenn die Geschwindigkeit des Fahrzeugs im Wesentlichen größer als oder gleich der Schwellengeschwindigkeit (V_{A}) ist.

2. Verfahren nach dem vorhergehenden Anspruch, **dadurch gekennzeichnet, dass** es einen Verarbeitungsschritt beinhaltet, bei dem die Geschwindigkeit (V) des Fahrzeugs mit der Schwellengeschwindigkeit (V_{A}) verglichen wird.

3. Verfahren nach einem der vorhergehenden Ansprüche, **dadurch gekennzeichnet, dass** das Starten des Verbrennungsmotors (2) zeitgleich mit dem Anhalten des Zusatzmotors (3) ausgeführt wird, wenn die Geschwindigkeit (V) des Fahrzeugs im Wesentlichen größer als oder gleich der Schwellengeschwindigkeit (V_{A}) ist.

4. Verfahren nach einem der vorhergehenden Ansprüche, **dadurch gekennzeichnet, dass** das Koppeln des Verbrennungsmotors (2) mit den Rädern (11) des Fahrzeugs durch das Schließen einer Kupplung (4) des Fahrzeugs ausgeführt wird.

5. Verfahren nach einem der Ansprüche 3 und 4, **dadurch gekennzeichnet, dass** es einen Schritt des Umschaltens des Drehmoments beinhaltet, der vorsieht, dass das Starten des Verbrennungsmotors (2) und das Anhalten des Zusatzmotors (3) so ausgeführt werden, dass das durch den Zusatzmotor (3) an die Räder (10) gelieferte Drehmoment in dem Maße abnimmt, wie das durch den Verbrennungsmotor (2) an die Räder (11) gelieferte Drehmoment zunimmt.

6. Verfahren nach einem der vorhergehenden Ansprüche, **dadurch gekennzeichnet, dass** es einen Schritt des Konfigurierens des Verbrennungsmotors (2) beinhaltet, um sein Starten zu erlauben.

7. Verfahren nach dem vorhergehenden Anspruch, **dadurch gekennzeichnet, dass** der Schritt des Konfigurierens darin besteht, eine Kraftstoffzufuhrvorrichtung des Verbrennungsmotors (2) und/oder eine Zündvorrichtung des Fahrzeugs und/oder eine Vorwärmvorrichtung einer Mischkammer des Verbrennungsmotors (2) zu aktivieren.

8. Verfahren nach einem der vorhergehenden Ansprüche, **dadurch gekennzeichnet, dass** es während des Koppelns ein Bestimmen eines angemessenen Übersetzungsverhältnisses vorsieht, welches es gestattet, die Kontinuität des von dem Fahrzeugführer geforderten Drehmomentsollwerts sicherzustellen.

9. System zum Starten eines Verbrennungsmotors (2), der in einem Hybrid- oder Doppelmoduskraftfahrzeug angeordnet ist, das Hardware- und Software-Komponenten beinhaltet, die ein Verfahren zum Starten eines Verbrennungsmotors (2) nach einem der vorhergehenden Ansprüche implementieren.

10. System nach dem vorhergehenden Anspruch, **dadurch gekennzeichnet, dass** die Hardware-Komponenten eine Steuereinheit (6), einen Geschwindigkeitssensor (19), einen Zusatzmotor (3) und eine Kopplungsvorrichtung (7) beinhalten, wobei die Kopplungsvorrichtung (7) insbesondere ein automatisiertes Getriebe (5) und eine Kupplung (4) beinhaltet und fähig ist, den Verbrennungsmotor (2) über einen Antriebsstrang (20) mit Rädern (11) des Fahrzeugs zu verbinden.

11. Hybrid- oder Doppelmoduskraftfahrzeug, das einen Verbrennungsmotor (2) beinhaltet, **dadurch gekennzeichnet, dass** es ein System zum Starten des Verbrennungsmotors (2) nach einem der Ansprüche 9 und 10 umfasst, wobei der Verbrennungsmotor (2) und der Zusatzmotor (3) insbesondere mit unterschiedlichen Achsen verbunden sind.

## Claims

1. Method for starting a combustion engine (2) fitted to a hybrid or dual-mode motor vehicle, the method providing a starting of an additional motor (3), upon a setpoint torque requested by a driver of the vehicle, with a view to accelerating the vehicle, the method being **characterized in that** the starting of the additional motor (3) aims to accelerate the vehicle beyond a threshold speed (V_{A}) at which the combustion engine (2) is driven beyond its stalling speed threshold when said combustion engine (2) is mechanically coupled to the wheels (11) of the vehicle and **in that**, when the speed of the vehicle is substantially greater than or equal to the threshold speed (V_{A}), a signal which aims to start the combustion engine (2) is emitted by a control unit (6) .

2. Method according to the preceding claim, **characterized in that** it comprises a processing step in which the speed (V) of the vehicle is compared to the threshold speed (V_{A}) .

3. Method according to either one of the preceding claims, **characterized in that** the starting of the combustion engine (2) is carried out simultaneously with the stopping of the additional motor (3) when the speed (V) of the vehicle is substantially greater than or equal to the threshold speed (V_{A}).

4. Method according to any one of the preceding claims, **characterized in that** the coupling of the combustion engine (2) to the wheels (11) of the vehicle is carried out by the closure of a clutch (4) of the vehicle.

5. Method according to either one of Claims 3 and 4, **characterized in that** it comprises a torque switching step, providing that the starting of the combustion engine (2) and the stopping of the additional motor (3) are carried out such that the torque provided to the wheels (10) by the additional motor (3) reduces as the torque provided to the wheels (11) by the combustion engine (2) increases.

6. Method according to any one of the preceding claims, **characterized in that** it comprises a step of configuring the combustion engine (2), permitting the starting thereof.

7. Method according to the preceding claim, **characterized in that** the step of configuring consists in the activation of a device for supplying fuel to the combustion engine (2) and/or a device for the spark ignition of the vehicle and/or a device for preheating a mixing chamber of the combustion engine (2).

8. Method according to any one of the preceding claims, **characterized in that** it provides, during the coupling, a determination of a suitable gear ratio which permits the continuity of the setpoint torque requested by the driver of the vehicle to be ensured.

9. System for starting a combustion engine (2) fitted to a hybrid or dual-mode motor vehicle, comprising hardware and software elements implementing a method for starting a combustion engine (2) according to any one of the preceding claims.

10. System according to the preceding claim, **characterized in that** the hardware elements comprise a control unit (6), a speed sensor (19), an additional motor (3) and a coupling device (7), the coupling device (7) comprising, in particular, a semiautomatic gearbox (5) and a clutch (4) and being capable of connecting the combustion engine (2) to wheels (11) of the vehicle by means of a transmission chain (20).

11. Hybrid or dual-mode motor vehicle comprising a combustion engine (2), **characterized in that** it comprises a starting system of the combustion engine (2) according to any one of Claims 9 and 10, in particular the combustion engine (2) and the additional motor (3) being connected to different axles.
